Europäisches Patentamt

European Patent Office

Office européen des brevets

(11) Numéro de publication: **0 268 515 B1**

## FASCICULE DE BREVET EUROPEEN

(45) Date de publication de fascicule du brevet:
03.07.91

(51) Int. Cl.5: **H01G  4/30, H01G 13/02**

(21) Numéro de dépôt: **87402389.8**

(22) Date de dépôt: **23.10.87**

(54) **Roue de bobinage pour cuisson à haute température des condensateurs empilés.**

(30) Priorité: **28.10.86 FR 8614977**

(43) Date de publication de la demande:
**25.05.88 Bulletin  88/21**

(45) Mention de la délivrance du brevet:
**03.07.91 Bulletin  91/27**

(84) Etats contractants désignés:
**DE IT**

(56) Documents cités:
**DE-A- 2 752 767**
**US-A- 2 731 706**
**US-A- 3 506 895**

(73) Titulaire: **COMPAGNIE EUROPEENNE DE COMPOSANTS ELECTRONIQUES LCC**
**50, rue Jean-Pierre Timbaud**
**F-92400 Courbevoie(FR)**

(72) Inventeur: **Bon Serge**
**THOMSON-CSF SCPI 19, avenue de Messine**
**F-75008 Paris(FR)**
Inventeur: **Delalande François**
**THOMSON-CSF SCPI 19, avenue de Messine**
**F-75008 Paris(FR)**

(74) Mandataire: **Guérin, Michel et al**
**THOMSON-CSF SCPI**
**F-92045 PARIS LA DEFENSE CEDEX 67(FR)**

## Description

La présente invention concerne la fabrication des condensateurs du type empilés et obtenus par bobinage sur une roue de grand diamètre.

Cette technique de bobinage est maintenant largement répandue. On utilise généralement des films diélectriques métallisés. Le bobinage s'effectue de façon à réaliser un décalage latéral entre deux feuillets successifs de l'empilement afin de pouvoir ultérieurement déposer des contacts électriques sur les côtés de l'empilement. Une fois l'empilement réalisé, celui-ci est soumis à un traitement thermique destiné à stabiliser ses propriétés électriques, en particulier la tangente de l'angle de pertes et la valeur de la capacité. Ce traitement thermique permet également d'éliminer les inclusions d'air entre les feuillets de l'empilement. Le traitement comprend un pressage de l'empilement directement sur la roue de bobinage et à des températures assez élevées (de l'ordre de 240˚C). La roue de bobinage est généralement réalisée en aluminium et son diamètre est couramment de l'ordre de 800 mm. Le traitement thermique induit une dilatation de la roue et par conséquent un allongement important des condensateurs mères pendant la cuisson. Une roue en aluminium de 800 mm de diamètre subit, entre 20˚C et 240˚C, un allongement de 4 mm pour son diamètre ce qui correspond à plus de 12 mm pour sa circonférence.

L'allongement résultant des condensateurs mères a pour effet de contrecarrer les effets bénéfiques dus à la cuisson elle-même. Pour pallier cet inconvénient, il est possible d'utiliser des roues en matériaux à coefficient de dilation nul, par exemple en invar. Ces matériaux sont malheureusement très onéreux et ne sont pas utilisés dans ce cas particulier car ils augmenteraient trop fortement le prix de revient des condensateurs.

Afin de pallier ces inconvénients, l'invention propose d'utiliser une roue de conception particulière qui permet d'associer différents matériaux. La roue selon l'invention comporte plusieurs parties dont notamment une jante amovible du corps de la roue et tendue radialement de façon qu'elle puisse se dilater librement sous l'effet de la chaleur. Cette jante, réalisée en un matériau couramment employé dans ce type de technologie (l'aluminium par exemple), se trouve enserrée par un cerceau réalisé à partir d'un matériau possédant un coefficient de dilatation nul ou pratiquement nul. Le cerceau impose donc un diamètre extérieur constant pour la roue et permet la libre dilatation de la jante.

L'invention a donc pour objet une roue de bobinage pour condensateurs empilés, qui est formée d'un corps de roue sur lequel est fixée d'une manière amovible une jante dont la circonférence est coupée sur une certaine longueur, la jante étant enserrée dans un cerceau réalisé en un matériau à coefficient de dilatation thermique pratiquement nul, tel que l'invar, ladite longueur coupée étant calculée pour que, lorsque la jante et le cerceau qui l'enserre sont désolidarisés du corps de roue et portés à une température déterminée, les extrémités de la jante définies par la coupure ne se touchent.

L'invention sera mieux comprise et d'autres avantages apparaîtront au moyen de la description qui va suivre, donnée à titre non limitatif, et grâce aux dessins annexés parmi lesquels :

- la figure 1 représente la jante équipée de son cerceau,
- la figure 2 est une vue de détail de la figure 1,
- la figure 3 représente la roue de bobinage selon l'invention,
- la figure 4 illustre l'étape de traitement thermique des condensateurs mères.

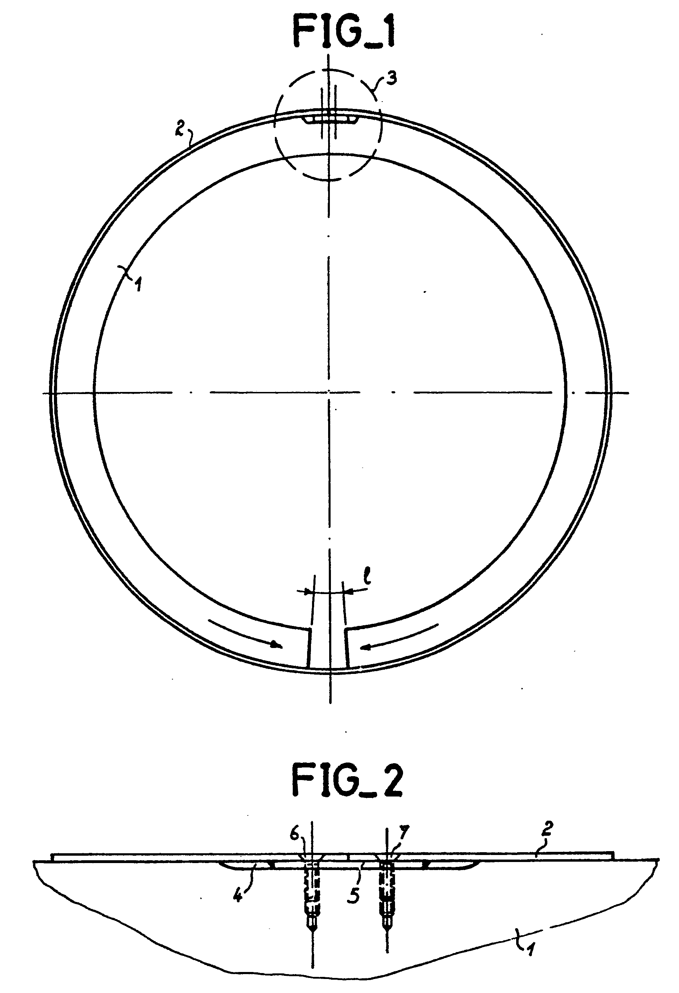

Sur la figure 1, la jante 1 est enserrée dans le cerceau 2. La jante est un cercle relativement épais pour garder une certaine rigidité lorsqu'il est suspendu en l'un de ses points. Le matériau utilisé pour sa réalisation peut être d e l'aluminium, matériau couramment employée pour réaliser les roues de bobinages. La jante est interrompue sur une certaine longueur 1. Le diamètre du cerceau 2 est tel qu'à la température de bobinage, le cerceau enserre la jante 1. La coupure du cercle de la jante facilite la mise en place du cerceau autour de la jante. Celle-ci peut être équipée de moyens de préhension pour permettre de rapprocher les deux extrémités du cercle coupé. Le cas échéant, le cerceau peut se présenter sous la forme d'un cercle coupée pour que son ajustement au diamètre extérieur de la jante soit plus aisé à obtenir ou sous la forme d'une bande que l'on referme sur elle-même. La jointure des deux extrémités du cerceau 2 doit être nette pour que la surface d'enroulement constituée par la périphérie du cerceau soit aussi lisse que possible.

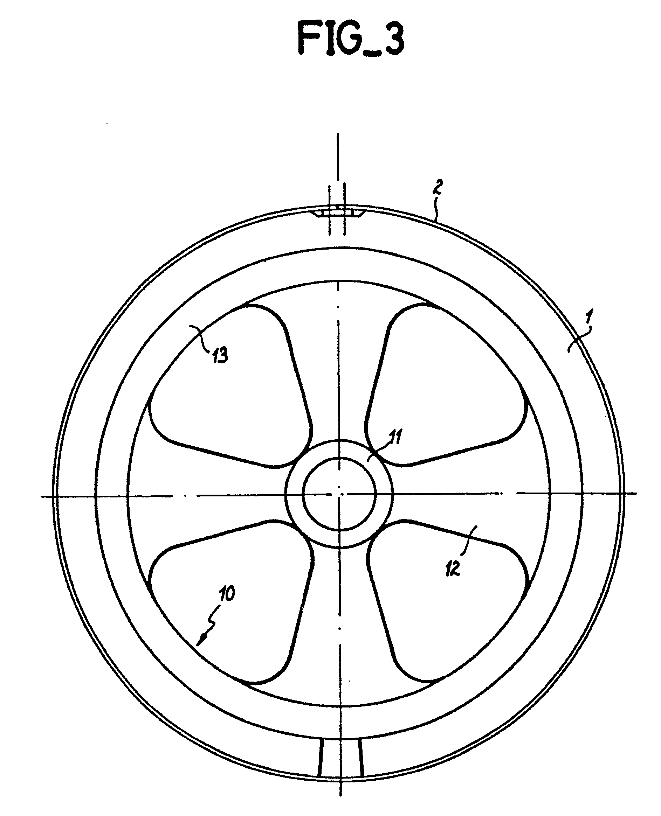

La figure 2 montre une réalisation possible de la fermeture du cerceau lorsque celui-ci est coupé. Cette figure correspond à la partie référencée 3 sur la figure 1. Avant sa mise en place autour de la jante, les deux extrémités correctement usinées du cerceau sont jointes et une plaque 5, possédant une courbure sensiblement égale à celle du cerceau, est soudée sur la partie interne du cerceau pour les fixer définitivement. Une gorge 4 est pratiquée dans la jante pour loger la plaque 5 lorsque le cerceau est mis en place sur la jante. La plaque 4 est de préférence choisie dans le même matériau que celui du cerceau.

Il est préférable que le cerceau soit fixé sur la jante en un point de sa phériphérie. Ceci contribuera fortement à ce que lors d'un échauffement de la jante, la dilatation subséquente se manifeste par un rapprochement de ses deux extrémités de la façon indiquée par les deux flèches sur la figure 1, plutôt que par une déformation du cerceau causée par la pression mécanique exercée par la jante. Le glissement de la jante dans le cerceau de part et d'autre de leur point de fixation se fera d'autant mieux si ce point de fixation est diamétralement opposé à la coupure pratiquée dans la jante comme le montre la figure 1.

Dans le cas pratique illustré par la figure 2, on a choisi comme moyens de fixation entre la jante 1 et le cerceau 2 deux vis 6 et 7 placées de part et d'autre de la coupure du cerceau. Ces vis traversent la plaque 5 et se fixent dans la jante 1. Il est préférable de choisir des vis à tête fraisée pour que la surface extérieure du cerceau reste unie.

Le cerceau est réalisé à partir d'un matériau possédant un coefficient de dilatation nul ou pratiquement nul, par exemple en invar. Dans le cas pratique d'une jante en aluminium de diamètre 0,8 m, un cerceau d'invar d'épaisseur 2 mm peut être utilisé si le cerceau est fixé en un point de la jante opposé à la fente de cette dernière. La dilatation libre des deux parties de la jante est alors possible et la résistance mécanique du cerceau est suffisante pour maintenir un diamètre extérieur de la roue pratiquement constant. La jante ci-dessus équipée de son cerceau et portée à une température de 240° C subit une dilatation de 4/100 mm sur son diamètre extérieur ce qui provoque un allongement de 12/100 mm de la longueur des condensateurs mères. Cet allongement est négligeable vis-à-vis de la longueur des condensateurs mères (environ 2,5m).

L'opération d'enroulement des condensateurs mères est effectuée sur la roue de bobinage représentée à la figure 3. La roue comprend un corps de roue 10 sur lequel est montée la jante 1 équipée du cerceau 2. Le corps de roue est formé de façon classique d'un moyeu 11, de rayons 12 est d'une jante 13. La fixation de la jante 1 sur le corps de roue 10 peut se faire par tout moyen connu de l'homme de l'art. On choisira de préférence une méthode de fixation qui permette un démontage rapide.

Il a été dit plus haut que la circonférence d'une jante en aluminium de 800 mm de diamètre doit pouvoir s'allonger d'environ 12 mm. Cet allongement doit pouvoir s'effectuer dans la partie coupée de la jante de longueur 1. La longueur 1 sera donc au moins égale à 12 mm.

Lorsque l'enroulement est réalisé, la jante, avec son cerceau et les condensateurs mères qui y sont enroulés, est dégagée du corps de roue et placée dans une étuve pour permettre le traitement thermique des condensateurs mères. On remarque qu'il suffit de suspendre la jante dans l'étuve pour effectuer le traitement thermique. Le corps de roue reste sur la machine d'enroulement et peut recevoir une autre jante. Un autre avantage de l'invention est qu'il n'y a pas de chaleur absorbée par le corps de roue lors du traitement thermique.

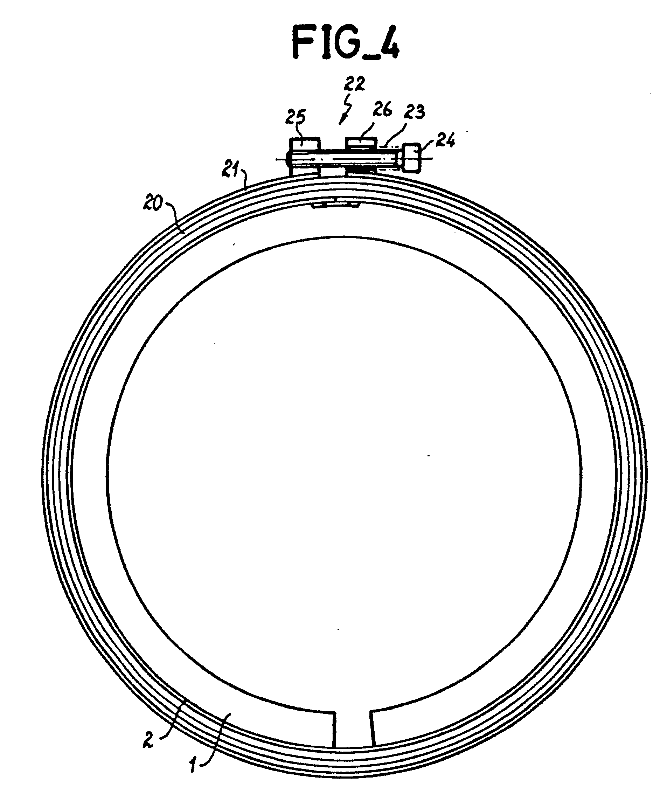

Lors du traitement thermique, il est d'usage de recouvrir les condensateurs mères d'un cerclage de maintien et de compactage. Il est à remarquer qu'avec la roue de bobinage selon l'invention, un cerclage en un matériau à coefficient de dilatation nul n'est pas obligatoire. On peut avantageusement utiliser un cerclage en une matière métallique quelconque monté avec un ressort taré de compensation. Dans ce cas, le ressort encaisse avec une force constante les dilatations, du cerclage. C'est ce qui est représenté à la figure 4. Les condensateurs mères désignés sous la référence générale 20 sont enroulés sur le cerceau 2 de la jante 1. Un cerclage de maintien 21 enserre l'ensemble des condensateurs mères selon une technique bien connue de l'homme de l'art. Pour compenser sa dilatation due au traitement thermique, le cerclage 21 est équipé d'un dispositif de serrage 22 muni d'un ressort taré 23. Avant le traitement thermique, le cerclage 21 est serré sur les condensateurs mères grâce è la vis 24 qui passe librement dans l'alésage de l'élément 26 solidaire de l'une des branches du cerclage 21, et qui se visse dans l'élément 25 solidaire de l'autre branche. Lors du traitement thermique, la dilatation du cerclage 21 fait que la pression qu'il exerce sur les condensateurs mères a tendance à se relâcher. Le ressort taré 23 placé entre l'élément 26 et la tête de la vis 24 joue alors son rôle et resserre le cerclage 21 contre les condensateurs mères.

La roue de bobinage selon l'invention permet la cuisson à haute température de tous les diélectriques utilisés pour la fabrication des condensateurs, en particulier des diélectriques dits "laqués" et surtout des diélectriques thermostables tels que les polyhydantoïnes, les polyphényquinoxalines et les polyimides.

Le coût de revient des supports de bobinage reste faible, tant par la matière utilisée (principalement de l'aluminium) que par l'usinage. Les résultats obtenus sont aussi bons que si la roue de bobinage était entièrement réalisée en un matériau tel que l'invar.

**Revendications**

1. Roue de bobinage pour condensateur empilés, qui est formée d'un corps de roue (10) sur lequel est fixée d'une manière amovible une jante (1) dont la circonférence est coupée sur une certaine longueur, la jante étant enserrée dans un cerceau (2) réalisé en un matériau à coefficient de dilatation thermique pratiquement nul, tel que l'invar, ladite longueur coupée étant calculée pour que, lorsque la jante (1) et le cerceau (2) qui l'enserre sont désolidarisés du corps de roue (10) et portés à une température déterminée, les extrémités de la jante définies par la coupure ne se touchent.

2. Roue de bobinage selon la revendication 1, caractérisée en ce que le cerceau (2) est formé à partir d'une bande dont les deux extrémités sont fixées bout à bout.

3. Roue de bobinage selon la revendication 2, caractérisée en ce que la fixation des deux extrémités de ladite bande est réalisée par soudure.

4. Roue de bobinage selon l'une des revendications 2 ou 3, caractérisée en ce que la fixation des deux extrémités de ladite bande est obtenue par l'intermédiaire d'une plaque (5).

5. Roue de bobinage selon la revendication 4, caractérisée en ce que ladite plaque (5) est réalisée dans le même matériau que celui du cerceau (2).

6. Roue de bobinage selon l'une des revendications 4 ou 5, caractérisée en ce que ladite jante (1) comprend une gorge (4) destinée à loger ladite plaque (5).

7. Roue de bobinage selon l'une quelconque des revendications 1 à 6, caractérisée en ce quel le cerceau (2) est fixé en un point de la jante (1).

8. Roue de bobinage selon l'une quelconque des revendications 2 à 6, caractérisée en ce que le cerceau (2) est fixé sur la jante (1) en deux points, chaque point étant situé à chacune des extrémités de la bande formant le cerceau.

9. Roue de bobinage selon la revendication 8, caractérisée en ce que la fixation du cerceau sur la jante se fait par l'intermédiaire de vis (6,7).

10. Roue de bobinage selon l'une quelconque des revendications 7 à 9, caractérisée en ce que la fixation du cerceau (2) sur la jante (1) se fait à un endroit diamétralement opposé à la partie coupée de ladite jante.

11. Roue de bobinage selon l'une quelconque des revendications 1 à 10, caractérisée en ce que la jante (1) est en aluminium.

12. Roue de bobinage selon l'une quelconque des revendications précédentes, caractérisée en ce que le cerceau (2) est en invar.

**Claims**

1. A winding reel for stacked capacitors which is constituted by a reel body (10) and a rim (1) releasably fixed thereto and having a cut-out portion of a given length of its circonference, the rim being encompassed by a hoop (2) made of a material of substantially zero thermal expansion coefficient such as Invar, the length of said cut-out portion being calculated such that when the rim (1) and the encompassing hoop (2) are withdrawn from the reel body (10) and heated up to a predetermined temperature, the rim ends defined by the cut do not touch each other.

2. A winding reel according to claim 1, characterized in that the hoop (2) is made of a strip whose two ends are fixed end-to-end.

3. A winding reel according to claim 2, characterized in that the fixing of the two ends of said strip is made by welding.

4. A winding reel according to one of claims 2 or 3, characterized in that fixing of the two ends of the strip is obtained via a plate (5).

5. A winding reel according to claim 4, characterized in that said plate (5) is made from the same material as the hoop (2).

6. A winding reel according to one of claims 4 or 5, characterized in that said rim (1) comprises a groove (4) conceived to receive said plate (5).

7. A winding reel according to any one of claims 1 to 6, characterized in that the hoop (2) is fixed to the rim (1) at a point thereof.

8. A winding reel according to any one of claims 2 to 6, characterized in that the hoop (2) is fixed to the rim (1) at two points, each point being located at one of the ends of the strip constituting the hoop.

9. A winding reel according to claim 8, characterized in that the fixing of the hoop to the rim is made via screws (6, 7).

10. A winding reel according to any one of claims 7 to 9, characterized in that the fixing of the hoop (2) to the rim (1) is made at a point which is diametrically opposed to the cut-out portion of the rim.

11. A winding reel according to any one of claims 1 to 10, characterized in that the rim (1) is made of aluminium.

12. A winding reel according to any one of the preceding claims, characterized in that the hoop (2) is made from Invar.

## Ansprüche

1. Wickelrad für gestapelte Kondensatoren mit einem Radkörper (10), auf dem eine Felge (1) abnehmbar befestigt ist, wobei die Felge an ihrem Umfang über eine gewisse Länge aufgeschnitten ist und in einen Spannring (2) aus einem Material mit einem thermischen Ausdehnungskoeffizienten praktisch Null, wie z.B. Invar, eingespannt ist, wobei die abgeschnittene Felgenlänge so berechnet ist, daß die Schnittenden der Felge sich nicht berühren, wenn die Felge (1) und der sie einspannende Spannring (2) vom Radkörper (10) gelöst und auf eine bestimmte Temperatur gebracht werden.

2. Wickelrad nach Anspruch 1, dadurch gekennzeichnet, daß der Spannring (2) von einem Band gebildet wird, dessen beide Enden stirnseitig miteinander verbunden sind.

3. Wickelrad nach Anspruch 2, dadurch gekennzeichnet, daß die Befestigung der beiden Bandenden durch Verschweißen erfolgt.

4. Wickelrad nach einem der Ansprüche 2 oder 3, dadurch gekennzeichnet, daß die Befestigung der beiden Bandenden über eine Platte (5) erfolgt.

5. Wickelrad nach Anspruch 4, dadurch gekennzeichnet, daß die Platte (5) aus demselben Material wie der Spannring (2) besteht.

6. Wickelrad nach einem der Ansprüche 4 oder 5, dadurch gekennzeichnet, daß die Felge (1) eine Vertiefung (4) zur Aufnahme der Platte (5) aufweist.

7. Wickelrad nach einem beliebigen der Ansprüche 1 bis 6, dadurch gekennzeichnet, daß der Spannring (2) an einem Punkt der Felge (1) befestigt ist.

8. Wickelrad nach einem beliebigen der Ansprüche 2 bis 6, dadurch gekennzeichnet, daß der Spannring (2) auf der Felge (1) an zwei Punkten befestigt ist, die je an einem Ende des den Spannring bildenden Bandes liegen.

9. Wickelrad nach Anspruch 8, dadurch gekennzeichnet, daß die Befestigung des Spannrings auf der Felge über Schrauben (6, 7) erfolgt.

10. Wickelrad nach einem beliebigen der Ansprüche 7 bis 9, dadurch gekennzeichnet, daß die Befestigung des Spannrings (2) auf der Felge (1) an einer Stelle erfolgt, die diametral der Stelle gegenüberliegt, an der die Felge zerschnitten ist.

11. Wickelrad nach einem beliebigen der Ansprüche 1 bis 10, dadurch gekennzeichnet, daß die Felge (1) aus Aluminium besteht.

12. Wickelrad nach einem beliebigen der vorhergehenden Ansprüche, dadurch gekennzeichnet, daß der Spannring (2) aus Invar ist.

# FIG_1

# FIG_2

# FIG_3

# FIG_4